# FASCICULE DE BREVET EUROPEEN

(11) **EP 2 168 810 B1**
(45) Date de publication et mention de la délivrance du brevet: **11.09.2013**
(21) Numéro de dépôt: 09170791.9
(22) Date de dépôt: 21.09.2009
(51) Int. Cl.: B60Q 1/04, B60Q 1/26

(54) **Dispositif d'éclairage ou de signalisation comportant des moyens de fixation par cheville d'expansion**
Lighting or signalling device comprising means for fixing by an expansion pin
Beleuchtungs- oder Signalisierungsvorrichtung, die Mittel zur Befestigung mit einem Spreizdübel umfasst

(30) Priorité: 26.09.2008 FR 0805329
(43) Date de publication de la demande: 31.03.2010
(73) Titulaire: VALEO VISION, 93012 Bobigny (FR)
(72) Inventeur: Lelarge, Olivier, 89100, GRON (FR)

(56) Documents cités:
- EP-A- 1 228 925
- DE-A1- 4 112 618
- DE-A1- 19 650 864
- FR-A- 2 746 729

## Description

L'invention se rapporte à un dispositif d'éclairage ou de signalisation de véhicule automobile, notamment un feu ou un projecteur, comportant un boîtier arrière qui est destiné à être fixé à un élément de carrosserie du véhicule automobile au moyen d'une cheville à expansion.

La demande de brevet EP 1 228 925 A1 décrit un feu arrière pour un véhicule automobile comportant une vis pour monter ce feu sur le véhicule.

L'invention se rapporte plus particulièrement à un dispositif d'éclairage ou de signalisation de véhicule automobile comportant un boîtier arrière qui est destiné à être fixé à un élément de carrosserie du véhicule automobile par des moyens de fixation.

Pour améliorer l'aspect esthétique du véhicule, il est connu d'intégrer les projecteurs à la carrosserie du véhicule en faisant affleurer la glace des projecteurs aux éléments de carrosserie adjacents de manière à donner l'impression d'une continuité entre les courbes de la carrosserie et la surface de la glace de protection des projecteurs.

A cette fin, certaines zones des bords de la glace de protection sont en contact avec les éléments de carrosserie adjacents par l'intermédiaire de tampon de matériau élastique telle que de la mousse.

Lors de la fixation du projecteur ou du feu dans une cavité prévue à cet effet dans la carrosserie du véhicule, il est très important de doser précisément l'effort axial de fixation au véhicule.

En effet, un effort de fixation trop important entraînerait un serrage très important des bords de la glace sur la carrosserie, et la création de contraintes très élevées dans la glace. La glace risque alors de se briser sous l'effet de ces contraintes, soit spontanément, soit sous l'effet d'une légère déformation de la carrosserie, par exemple lorsque le véhicule roule sur une route cahoteuse.

De plus, si l'effort de fixation est insuffisant, il existe un risque que le projecteur bouge dans sa cavité.

Pour résoudre ces problèmes, l'invention propose un dispositif d'éclairage ou de signalisation de véhicule automobile, comportant un boîtier arrière qui est destiné à être fixé à un élément de carrosserie du véhicule automobile par des moyens de fixation qui comportent :
- un logement de fixation ouvert vers l'arrière qui est porté par le boîtier ;
- une vis longitudinale de fixation qui comporte une tête avant ;
- une cheville à expansion en forme de douille d'axe longitudinal dans laquelle la tête de vis est insérée et qui est reçue coulissante axialement dans le logement de fixation ;
- au moins une patte d'expansion de la cheville qui est déformable vers un état expansé dans lequel une extrémité libre de la patte d'expansion est pressée radialement contre la face intérieure du logement avec un effort radial de serrage pour bloquer en coulissement la cheville par rapport au boîtier, et comportant également des moyens pour limiter l'effort radial de serrage de la patte d'expansion à une valeur maximale indépendamment d'un effort axial de vissage appliqué sur la vis.

Selon d'autres caractéristiques de l'invention optionnelles :
- la patte d'expansion est en contact avec la tête de vis par l'intermédiaire d'une rampe de guidage, notamment pour commander la patte d'expansion vers son état expansé par coulissement axial de la tête de vis vers l'arrière par rapport à la cheville ;
- les moyens pour limiter l'effort radial de serrage comportent la rampe de guidage qui présente un encombrement radial de dimension déterminée, notamment pour limiter l'effort radial maximal de serrage de la patte d'expansion contre la face intérieure du logement à une valeur maximale en deçà d'un effort de rupture de ladite face ;
- la rampe de guidage présente un encombrement longitudinal tel que l'effort radial maximal de serrage de la patte d'expansion est atteint avant que la tête de vis soit en butée contre la face radiale avant de butée de la cheville, l'effort radial maximal de serrage étant maintenu par contact de la patte d'expansion avec une face (longitudinale) de la tête de vis jusqu'à ce que la tête de vis soit dans sa position (longitudinale) de fixation ;
- la tête de vis comporte une face radiale arrière qui est destinée à venir en butée contre une face radiale avant de butée de la cheville pour bloquer le coulissement de la cheville vers l'avant par rapport à la tête de vis dans une position axiale extrême arrière de fixation ;
- la patte d'expansion demeure dans son état de repos sous l'effet de la traction axiale de la tête de vis, notamment pour permettre le coulissement de la cheville depuis sa position avant de montage jusqu'à sa position axiale arrière de butée ;
- la cheville comporte un collerette d'extrémité arrière s'étendant radialement vers l'intérieure qui comporte une face radiale arrière de butée contre l'élément de carrosserie et une face avant formant la face avant de butée de la cheville, notamment pour bloquer le coulissement de la tête de vis vers l'arrière, la collerette étant ainsi comprimée entre la tête de vis et l'élément de carrosserie lorsque le dispositif d'éclairage ou de signalisation est fixé sur le véhicule ;
- la rampe de guidage est portée par un ergot qui s'étend radialement depuis l'extrémité libre de la patte d'expansion et qui est reçu dans une gorge de la tête de vis, la patte d'expansion étant guidée vers son état expansé par contact entre la rampe de guidage et la face radiale avant de la gorge ;
- lorsque l'effort radial maximal de serrage est atteint, l'ergot glisse hors de la gorge sur la face cylindrique extérieure de la tête de vis pour maintenir l'effort radial maximal de serrage ;
- la face (cylindrique) extérieure de la cheville à expansion présente un profil de forme complémentaire de celui du logement de fixation, ledit profil n'étant pas de révolution, notamment de manière à immobiliser la cheville à expansion en rotation dans les deux sens autour de l'axe (longitudinal) par rapport au logement de fixation. II peut par exemple s'agir d'un profil en forme de polygone, en forme d'hexagone par exemple, ou encore tout profil comprenant au moins deux segments de droite contigus, le reste du profil pouvant être courbe.
- le profil transversal de la face intérieure du logement présente au moins un méplat qui coopère avec un méplat associé en vis-à-vis de la face cylindrique extérieure la cheville, notamment de manière à bloquer la rotation de la cheville dans le logement autour de l'axe (longitudinal) ;
- le méplat est réalisé venu de matière en une seule pièce avec le boîtier du dispositif d'éclairage ou de signalisation ;
- le profil transversal de la face (cylindrique) extérieure de la tête de vis et le profil transversal de la face (cylindrique) intérieure de la cheville à expansion présentent des contours de formes complémentaire qui ne sont pas de révolution, notamment de manière à bloquer dans les deux sens la rotation de la vis par rapport à la cheville à expansion autour de l'axe (longitudinal) ; II peut par exemple s'agir, ici aussi, d'un profil en forme de polygone, en forme d'hexagone par exemple, ou encore tout profil comprenant au moins deux segments de droite contigus, le reste du profil pouvant être courbe.
- la tête de vis présente au moins un méplat dans sa face cylindrique extérieure qui coopère avec un méplat associé en vis-à-vis de la face cylindrique intérieure de la cheville, notamment de manière à bloquer la rotation de la tête de vis dans la cheville autour de l'axe longitudinal ;
- l'extrémité arrière libre de la patte d'expansion présente des rugosités, des créneaux, ou encore une zone texturée, notamment de manière à augmenter l'adhérence de la patte d'expansion contre la face du logement en vis-à-vis lorsque la patte d'expansion est dans son état expansé.
- un joint annulaire d'étanchéité, par exemple en matériau élastomère, est interposé entre le boîtier et l'élément de carrosserie en entourant la vis de fixation.

D'autres caractéristiques et avantages de l'invention apparaîtront à la lecture de la description détaillée qui va suivre pour la compréhension de laquelle on se reportera aux dessins annexés, parmi lesquels :
- la figure 1 est une vue en perspective qui représente l'arrière d'un boîtier d'un feu de signalisation selon l'invention ;
- la figure 2 est une vue en perspective éclatée qui représente les moyens de fixation par vissage et cheville à expansion réalisés selon l'invention ;
- la figure 3 est une vue en coupe axiale qui représente les moyens de fixation lors du positionnement du feu de signalisation sur un élément de carrosserie du véhicule automobile ;
- les figures 4 à 8 représentent les positions successives de la vis et de la cheville à expansion lors de la fixation du feu de signalisation par vissage d'un écrou sur la tige filetée de la vis.

Dans toute le présent texte, on adoptera à titre non limitatif une orientation longitudinale dirigée d'arrière en avant qui est indiquée par la flèche "L" aux figures, et des orientations radiales qui rayonnent perpendiculairement à l'axe longitudinal de la vis depuis l'intérieur vers l'extérieur. On comprendra que l'orientation longitudinale se rapporte à l'orientation de l'axe de la vis 28 et non à l'axe du véhicule automobile, et qu'on peut donc monter le feu (ou le projecteur) selon un axe oblique par rapport à l'axe longitudinal du véhicule lui-même.

Dans la suite de la description, des éléments ayant des fonctions similaires, analogues ou identiques seront désignés par des mêmes numéros de référence.

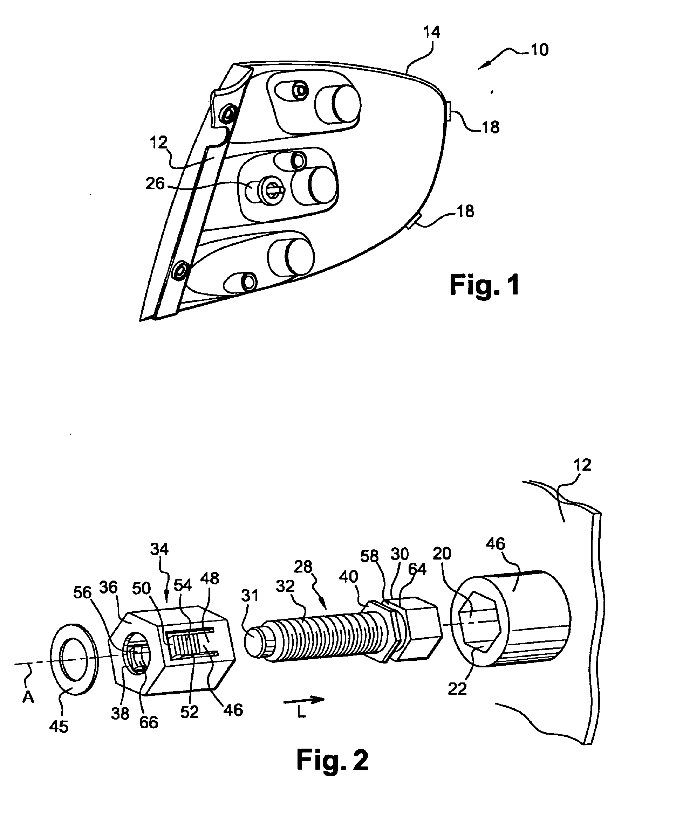

On a représenté à la figure 1 un dispositif d'éclairage ou de signalisation 10 de véhicule automobile comportant un boîtier arrière 12 qui est fermé par une glace avant 14. Seul le bord périphérique de la glace 14 est visible à la figure 1. II s'agit ici d'un feu de signalisation 10 destiné à être fixé sur le véhicule automobile dans une cavité (non représentée) de la carrosserie prévue à cet effet.

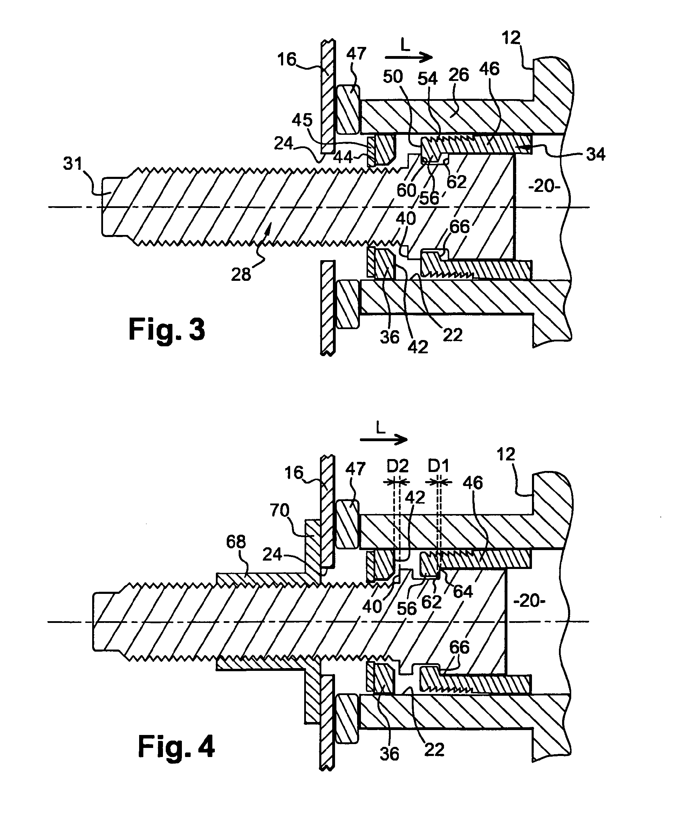

Comme représenté aux figures 3 à 8, la cavité du véhicule est ouverte vers l'avant et elle est limitée longitudinalement vers l'arrière par un fond formé par un élément de carrosserie 16 globalement radial.

Le pourtour de la cavité est aussi bordée par les bords d'éléments d'habillage (non représentés) de la carrosserie. Lors de la fixation du feu de signalisation 10, le bord périphérique de la glace 14 est destiné à être mis en contact avec les bords des éléments d'habillage afin que la surface de la glace 14 affleure à la surface des éléments d'habillage.

Pour éviter que la glace 14 ne soit endommagée par contact direct avec les éléments d'habillage, des tampons d'amortissement 18 réalisés en un matériau élastique, telle que de la mousse, sont interposés entre le bord de la glace 14 et les éléments d'habillage. Ces tampons 18 permettent notamment d'absorber les contraintes axiales susceptibles d'être transmises au feu de signalisation 10 lors de déformations élastiques de la carrosserie, par exemple lorsque le véhicule roule sur une route cahoteuse.

Comme représenté à plus grande échelle à la figure 2, la face externe arrière du boîtier 12 comporte des logements de fixation 20 ouverts longitudinalement vers l'arrière dans lesquels sont destinés à être reçus des moyens de fixation qui seront décrits plus en détail par la suite. Le boîtier 12 comporte ici trois logements de fixation 20 non alignés pour permettre une fixation isostatique du feu de signalisation 10 dans la cavité.

Chaque logement de fixation 20 présente une face intérieure cylindrique 22 d'axe longitudinal "A" qui est destinée à être agencé en coïncidence avec un orifice 24 associé de l'élément de carrosserie 16 formant le fond de la cavité.

De manière générale, le profil transversal de la face intérieure 22 du logement de fixation 20, c'est-à-dire la forme de la courbe directrice du cylindre, présente une forme qui n'est pas de révolution par rapport à l'axe longitudinal "A". Dans l'exemple représenté aux figures 2 à 8, le profil transversal du logement de fixation 20 présente une forme hexagonale, c'est-à-dire comportant six méplats.

Chaque logement de fixation 20 est ici agencé dans une protubérance cylindrique 26 qui s'étend longitudinalement en saillie vers l'arrière par rapport à la face arrière du boîtier 12.

Les logements de fixation 20 peuvent être débouchants à l'intérieur du feu de signalisation 10 ou borgnes.

La face intérieure 22 du logement de fixation 20, y compris les méplats, sont réalisés venus de matière en une seule pièce avec la protubérance 26.

Dans le mode de réalisation représenté aux figures, la protubérance 26 est elle-même réalisée venue de matière avec le boîtier 12.

Les moyens de fixation ont été représentés plus en détail à la figure 2. Les moyens de fixation étant tous identiques, un seul de ces moyens de fixation sera décrit par la suite.

Les moyens de fixation comportent notamment une vis longitudinale de fixation 28 qui comporte une tige filetée 32 qui comporte une extrémité arrière libre 31 et une tête d'extrémité avant 30.

La tige filetée 32 est destinée à être introduite longitudinalement vers l'arrière à travers l'orifice de fixation 24 de l'élément de carrosserie 16 en vis-à-vis du logement de fixation 20, de manière que la tête de vis 30 demeure en avant de l'élément de carrosserie 16.

La tête d'extrémité avant 30 présente une forme cylindrique d'axe longitudinal "A", et elle est destinée à être insérée axialement vers l'avant dans le logement de fixation 20.

Les moyens de fixation comportent aussi une cheville à expansion 34 qui se présente sous la forme d'une douille d'axe longitudinal "A" qui est destinée à entourer la tête de vis 30.

Une collerette 36 s'étend radialement vers l'intérieur depuis un bord d'extrémité arrière de la cheville à expansion 34 de manière à délimiter un trou circulaire central 38 pour permettre le passage de la tige filetée 32 de la vis 28. Ainsi, la tête de vis 30 est reçue dans la cheville à expansion 34 par translation axiale vers l'arrière en enfilant tout d'abord l'extrémité arrière libre 31 de la tige filetée 32 à travers le trou de passage 38.

Le trou de passage 38 présente un diamètre inférieur aux dimensions radiales de la tête de vis 30 de manière qu'une face radiale d'extrémité arrière 40 de la tête de vis 30 vienne en butée contre une face avant 42 de la collerette 36 formant face de butée pour bloquer le déplacement axial de la vis 28 dans une position longitudinale extrême arrière de fixation par rapport à la cheville à expansion 34 vers l'arrière.

De plus, le profil transversal de la face cylindrique extérieure de la tête de vis 30 et le profil transversal de la face cylindrique intérieure de la cheville à expansion 34 présentent des contours de formes complémentaire qui ne sont pas de révolution par rapport à l'axe longitudinal "A" de manière à bloquer dans les deux sens la rotation de la vis 28 par rapport à la cheville à expansion 34 autour de l'axe longitudinal "A". Dans l'exemple représenté aux figures lesdits contours présentent une forme hexagonale concentrique au profil de la face intérieure 22 du logement de fixation 20.

Ainsi, les méplats de la tête de vis 30 coopèrent avec les méplats associés en vis-à-vis de la face cylindrique intérieure de la cheville à expansion 34 de manière à bloquer la rotation de la tête de vis 30 dans la cheville à expansion 34 autour de l'axe longitudinal "A".

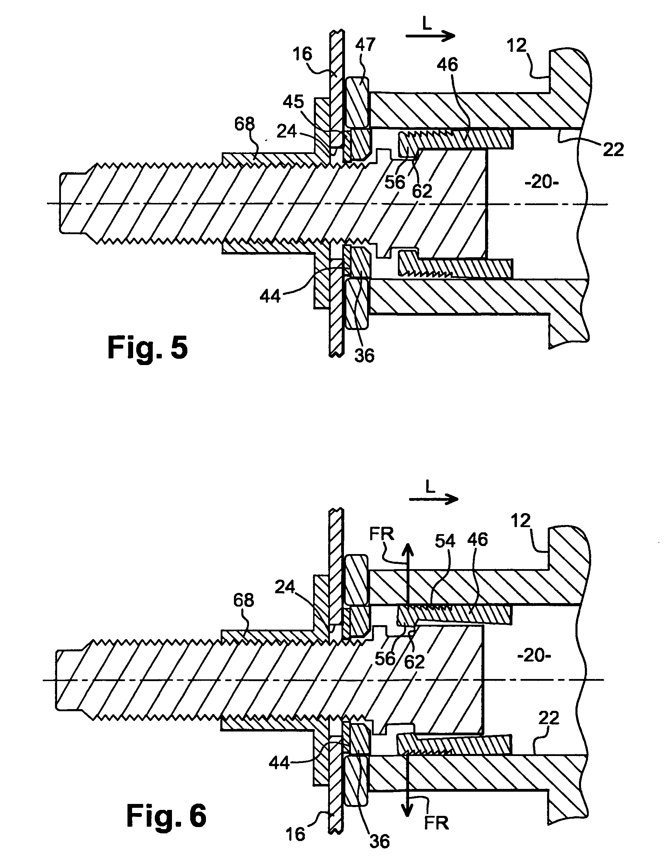

La cheville à expansion 34 est destinée à être insérée de manière coulissante dans le logement de fixation 20 entre une position axiale extrême avant de montage dans laquelle la cheville à expansion 34 est entièrement rentrée dans le logement de fixation 20, comme représentée à la figure 3, et une position axiale arrière de butée dans laquelle une face radiale d'extrémité arrière 44 de la collerette 36 de la cheville à expansion 34 est en butée axiale contre l'élément de carrosserie 16, comme représenté à la figure 5.

Une rondelle de matériau élastomère 45 est ici interposée entre l'élément de carrosserie 16 et la face d'extrémité arrière 44 de la cheville à expansion 34. Cette rondelle permet d'assurer l'étanchéité du boîtier de feu de signalisation 12.

Pour améliorer encore l'étanchéité du boîtier 12, un joint annulaire supplémentaire 47 en matériau élastomère est interposé entre l'extrémité arrière libre de la protubérance 26 du boîtier 12 et l'élément de carrosserie 16 en entourant la vis de fixation 28. Ce joint supplémentaire 47 est destiné à être comprimé longitudinalement après le montage des feux de signalisation 10 sur l'élément de carrosserie 16.

De plus, la cheville à expansion 34 est immobilisée en rotation dans les deux sens autour de l'axe longitudinal "A" par rapport au logement de fixation 20. A cet effet, la face cylindrique extérieure de la cheville à expansion 34 présente un profil de forme complémentaire de celui du logement de fixation 20 et ledit profil n'est pas de révolution. Ledit profil est ici de forme hexagonale.

Ainsi, les méplats du profil transversal de la face intérieure 22 du logement de fixation 20 coopèrent avec les méplats associés en vis-à-vis de la face cylindrique extérieure de la cheville à expansion 34 de manière à bloquer la rotation de la cheville à expansion 34 dans le logement de fixation 20 autour de l'axe longitudinal "A".

La cheville à expansion 34 comporte ainsi une paroi cylindrique d'épaisseur constante et de contour hexagonal.

Afin de permettre de maintenir temporairement la cheville à expansion 34 en position dans le logement de fixation 20, sa face cylindrique extérieure présente un angle de dépouille divergeant vers l'avant de manière que l'extrémité avant de la cheville à expansion 34 puisse être bloquée par un léger serrage à l'intérieur du logement de fixation 20, tout en permettant de faire coulisser longitudinalement la cheville à expansion 34 avec un effort relativement faible.

Au moins une patte d'expansion 46 est formée dans un méplat de la paroi cylindrique de la cheville à expansion 34. La patte d'expansion 46 est ainsi réalisée venue de matière avec la cheville à expansion 34.

Avantageusement la cheville à expansion 34 comporte au moins une paire de pattes d'expansion 46 opposées par rapport à l'axe longitudinal "A" pour permettre une meilleure fixation de la cheville à expansion 34 comme cela sera expliqué par la suite. Dans l'exemple représenté aux figures, la cheville à expansion 34 comporte une paire de pattes d'expansion 46.

Les deux pattes d'expansion 46 sont identiques par symétrie axiale par rapport à l'axe longitudinal "A". Une seule de ces deux pattes d'expansion 46 sera donc décrite par la suite.

La patte d'expansion 46 s'étend longitudinalement depuis une extrémité avant 48 de liaison avec la cheville à expansion 34 jusqu'à une extrémité arrière libre 50. Elle est délimitée par une fente 52 en forme de "U" ouvert vers l'avant qui est réalisée dans la paroi cylindrique de la cheville à expansion 34.

En outre, un tronçon d'extrémité arrière libre de la face extérieure de la patte d'expansion 46 présente des rugosités formées ici par des crans transversaux qui présentent en coupe axiale un profil dentelé, comme représenté aux figures 3 à 8. Cette portion sera par la suite désignée "face crantée 54". Cet état de surface a pour but d'augmenter l'adhérence de ladite face contre la face du logement lorsque la patte est dans son état expansé.

Selon une variante non représentée de l'invention, les crans de la face crantée peuvent être remplacés par tout autre moyens pour augmenter l'adhérence de ladite face contre la face du logement lorsque la patte est dans son état expansé, par exemple ladite face peut comporter des créneau ou, de manière générale, une surface rugueuse.

La patte d'expansion 46 est déformable élastiquement entre un état de repos vers lequel elle est rappelée élastiquement et dans lequel la patte d'expansion 46 est agencée dans le plan du méplat de la cheville à expansion 34, comme représentée aux figures 2 à 5, et un état expansé dans lequel elle est fléchie élastiquement radialement vers l'extérieur, comme représentée aux figures 6 à 8.

A cet effet, la cheville à expansion 34 est réalisée dans un matériau élastiquement déformable tel qu'un matériau plastique.

Lorsque la patte d'expansion 46 est dans son état de repos, la cheville à expansion 34 est libre de coulisser axialement dans le logement de fixation 20, tandis que lorsque la patte d'expansion 46 est poussée radialement vers son état expansé, la face crantée 54 à l'extrémité arrière libre 50 de la patte d'expansion 46 est pressée radialement contre la face intérieure 22 du logement de fixation 20 avec un effort radial de serrage, représenté par les vecteurs "FR" aux figures 6 à 8, pour bloquer axialement la cheville à expansion 34 par rapport au boîtier 12 par frottement.

La patte d'expansion 46 comporte en outre un ergot 56 qui s'étend radialement vers le bas depuis la face inférieure du tronçon d'extrémité arrière libre, et qui est destiné à être reçu dans une gorge annulaire 58 de la tête de vis 30.

La gorge annulaire 58 est plus particulièrement agencée à proximité de la face d'extrémité arrière 40 de la tête de vis 30. Elle est délimitée longitudinalement vers l'arrière par une face radiale arrière 60 et vers l'avant par une face radiale avant 62, sa jonction avec la face cylindrique extérieure de la tête de vis 30 formant une arête transversale avant 64.

Comme représenté à la figure 3, l'ergot 56 de la patte d'expansion 46 est de plus délimité longitudinalement vers l'avant par une rampe de guidage 66 inclinée qui permet de commander la patte d'expansion 46 vers son état expansé lors du coulissement axial de la tête de vis 30 vers l'arrière par rapport à la cheville à expansion 34 lorsque cette dernière est en position axiale de butée par contact entre la rampe de guidage 66 et l'arête avant 64 de la gorge 58.

Une première portion avant de la rampe de guidage 66 permet de déformer radialement la patte d'expansion 46 jusqu'à ce que la face crantée 54 entre en contact avec la face intérieure 22 du logement de fixation 20. Puis une deuxième portion arrière de la rampe de guidage 66 permet d'augmenter l'effort radial de serrage "FR" de la patte d'expansion 46 contre la face intérieure 22 du logement de fixation 20.

La rampe de guidage 66 présente entre son extrémité extérieure avant et son extrémité intérieure arrière un encombrement radial de dimension déterminée pour limiter l'effort radial "FR" de la patte d'expansion 46 dans son état expansé contre la face intérieure 22 du logement de fixation 20 à une valeur maximale en deçà d'un effort de rupture de la paroi de la protubérance 26.

En effet, tant que la rampe de guidage 66 glisse sur l'arête avant 64 vers l'avant relativement à la vis 28, la pente de la rampe de guidage 66 provoque la déformation radiale de la patte d'expansion 46 vers son état expansé. Puis, en poursuivant le glissement, la patte d'expansion 46 est limitée en déformation radiale par son contact avec la face intérieure 22 du logement de fixation 20, mais l'effort radial de serrage "FR" continu d'augmenter.

Lorsque l'extrémité arrière, c'est-à-dire l'extrémité intérieure, de la rampe de guidage 66 atteint l'arête avant 64, l'effort radial de serrage "FR" appliqué par la patte d'expansion 46 sur la face intérieure 22 du logement de fixation 20 atteint une valeur maximale. En effet, en poursuivant ce mouvement de translation de la cheville à expansion 34 par rapport à la vis 28, l'extrémité arrière de l'ergot 56 glisse alors sur la face extérieure de la tête de vis 30 qui présente une orientation longitudinale. La patte d'expansion 46 est ainsi verrouillée par la face cylindrique extérieure de la tête de vis 30 dans son état expansé en appliquant un effort radial maximal de serrage "FR" sur la face intérieure 22 du logement de fixation 20, sans augmentation de l'effort radial de serrage au-delà de l'effort radial maximal de serrage "FR".

Selon une variante non représentée de l'invention qui peut être réalisée de manière alternative ou cumulée avec le mode de réalisation représenté aux figures, la rampe de guidage est formée dans la face avant de la gorge de la tête de vis.

Pour permettre à l'ergot 56 de sortir complètement de la gorge 58 de la tête de vis 30, un jeu radial suffisant est réservé entre l'extrémité libre 50 des pattes d'expansion 46 et la face intérieure 22 du logement de fixation 20. Le jeu radial est bien sûr suffisamment faible pour que l'effort radial maximal de serrage "FR" des pattes d'expansion 46 en état expansé contre la face intérieure 22 du logement de fixation 20 permette l'immobilisation longitudinale totale par frottement de la cheville à expansion 34 par rapport au boîtier 12.

Dans cette position verrouillée, l'effort de réaction appliqué aux pattes d'expansion 46 par la face cylindrique de la tête de vis 30 est perpendiculaire à la face extérieure de la tête de vis 30. Ainsi, aucun effort axial n'est transmis entre la cheville à expansion 34 et la vis 28 par l'effort de rappel élastique des pattes d'expansion 46.

En outre, pour permettre ce verrouillage, l'effort radial maximal de serrage "FR" de la patte d'expansion 46 est atteint avant que la tête de vis 30 soit en butée contre la cloison arrière de la cheville à expansion 34.

A cet effet, l'encombrement longitudinal "D1" de la rampe de guidage 66 entre son extrémité avant et son extrémité arrière est inférieur à l'encombrement longitudinal "D2" entre la face d'extrémité arrière 40 de la tête de vis 30 et la face avant de butée 42 de la collerette 36 lorsque l'arête avant 64 de la tête de vis 30 est en contact avec l'extrémité avant de la rampe de guidage 66.

Ainsi, l'effort radial de serrage "FR" de la patte d'expansion 46 contre la face intérieure 22 du logement de fixation 20 est indépendant de l'effort axial de vissage "FA" appliqué sur la vis 28.

On décrit à présent l'opération de fixation du feu de signalisation 10 en référence aux figures 3 à 8.

Comme représenté à la figure 3, dans un premier temps la vis 28 est insérée longitudinalement vers l'arrière dans la cheville à expansion 34 par son extrémité arrière libre 31. Durant ce mouvement, les pattes d'expansion 46 sont déformées automatiquement dans leur état expansé par contact entre la rampe de guidage 66 et le bord d'extrémité avant de la tête de vis 30. Puis les ergots 56 glissent sur la face cylindrique extérieure de la vis 28 en maintenant les pattes d'expansion 46 dans leur état expansé jusqu'à ce que les ergots 56 soient agencés dans la gorge 58 de la tête de vis 30. Les pattes d'expansion 46 sont alors rappelées élastiquement dans leur état de repos.

Ainsi, la cheville à expansion 34 est avantageusement maintenue dans cette position sur la tête de vis 30 par encliquetage élastique des ergots 56 dans la gorge 58, ce qui évite notamment d'égarer la cheville à expansion 34 en la faisant tomber.

Puis la rondelle de matériau élastomère 45 est enfilée sur la tige filetée 32 de la vis 28 jusqu'à être en contact avec la face d'extrémité arrière 44 de la cheville à expansion 34.

La cheville à expansion 34 ainsi fixée sur la tête de vis 30 est ensuite positionnée sur le boîtier 12 par insertion axialement vers l'avant dans le logement de fixation 20 du boîtier 12 jusqu'à sa position avant de montage. L'insertion étant réalisée légèrement en force, par exemple manuellement, la vis 28 est ainsi maintenue en position dans le logement de fixation 20 pour permettre de venir positionner le feu de signalisation 10 dans la cavité du véhicule.

L'extrémité libre de la vis 28 est alors insérée dans l'orifice de fixation 24 de l'élément de carrosserie 16. Le boîtier 12 est conçu pour que le bord d'extrémité arrière de la protubérance 26 soit positionné de manière à serrer légèrement le joint supplémentaire 47 contre l'élément de carrosserie 16. L'élasticité du joint supplémentaire 47 permet d'absorber les différentes tolérances de fabrication et de montage.

Les dimensions longitudinales de la cheville à expansion 34 sont choisies de manière que les pattes d'expansion 46 soient constamment agencées à l'intérieur du logement de fixation 20 lorsque la cheville à expansion 34 est dans sa position arrière de butée en tenant compte des dispersions de tolérances qui sont susceptibles d'apparaître au cours de la fabrication ou du montage.

Le feu de signalisation 10 est immobilisé dans cette position durant toute l'opération de fixation. C'est l'opérateur qui positionne le feu de signalisation 10 qui applique l'effort axial désiré sur le feu de signalisation 10 pour serrer les bords de la glace 14 sur les éléments d'habillage. Comme expliqué par la suite, la fixation par cheville à expansion 34 permet de ne pas appliquer d'effort axial supplémentaire sur le feu de signalisation 10.

Puis, comme représenté à la figure 4, un écrou 68 est vissé sur l'extrémité libre de la vis 28 située en arrière de l'élément de carrosserie 16 de manière à être déplacé longitudinalement vers l'élément de carrosserie 16. L'écrou 68 comporte une collerette 70 arrière qui s'étend radialement vers l'extérieure. L'écrou 68 est vissé jusqu'à ce que la collerette vienne en butée contre la face arrière de l'élément de carrosserie 16.

Selon une variante non représentée de l'invention, la collerette est remplacée par une rondelle.

L'écrou 68 est alors en butée vers l'avant contre l'élément de carrosserie 16. En poursuivant le vissage de l'écrou 68, c'est donc la vis 28 qui est entraînée en coulissement longitudinal vers l'arrière jusqu'à ce que l'arête avant 64 de la gorge 58 entre en contact avec la rampe de guidage 66 des ergots 56 des pattes d'expansion 46.

Comme illustré à la figure 5, en poursuivant le vissage de l'écrou 68, la cheville à expansion 34 est tractée à l'encontre du léger serrage vers l'arrière par le déplacement de la vis 28 jusqu'à sa position arrière de butée dans laquelle la face d'extrémité arrière 44 de la cheville à expansion 34 est en butée contre la face avant de l'élément de carrosserie 16 avec interposition de la rondelle élastomère 45.

Durant cette phase de coulissement de la cheville à expansion 34, les pattes d'expansion 46 demeurent dans leur état de repos. A cet effet, la patte d'expansion 46 est suffisamment rigide pour demeurer dans son état de repos sous l'effet de la traction axiale de la tête de vis 30. II est aussi possible d'ajuster notamment la pente de la rampe de guidage 66 lors de la conception de la cheville à expansion 34.

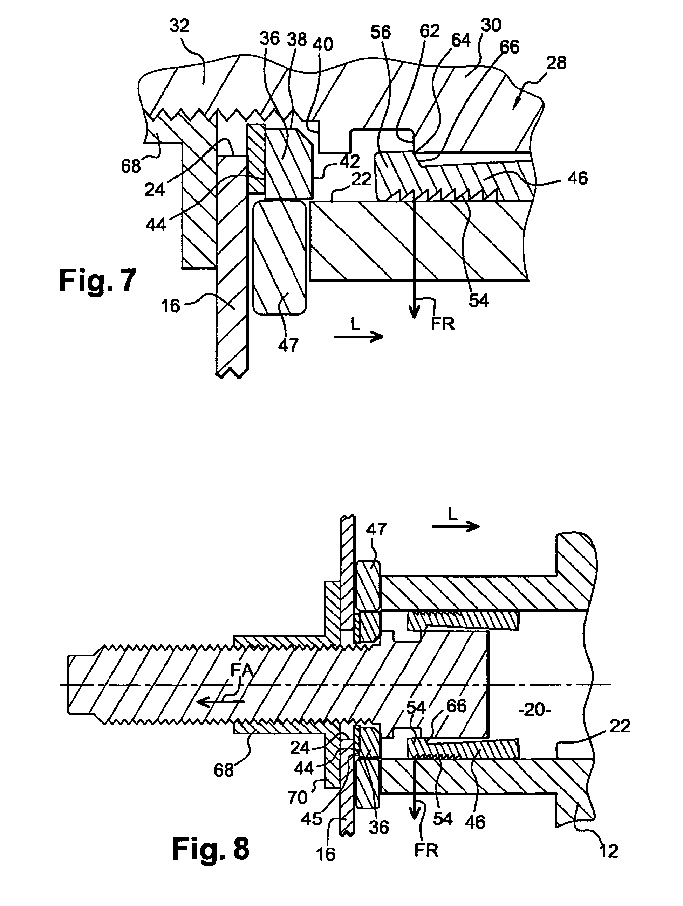

En poursuivant le vissage de l'écrou 68, comme représenté aux figures 6 et 7, la vis 28 continu son coulissement vers l'arrière tandis que la cheville à expansion 34 est bloquée dans sa position arrière de butée. L'arête avant 64 de la gorge 58 sollicite alors la rampe de guidage 66 de l'ergot 56 vers l'arrière.

La rampe de guidage 66 glisse alors sur l'arête avant 64 de la gorge 58 et les pattes d'expansion 46 sont déformées vers leur état expansé sous l'effet de l'effort axial de vissage "FA" appliqué par l'écrou 68 sur la vis 28. La face crantée 54 des pattes d'expansion 46 est alors pressée radialement contre la face intérieure 22 du logement de fixation 20 avec l'effort radial maximal de serrage "FR" pour immobiliser la cheville à expansion 34 longitudinalement dans les deux sens à l'intérieur du logement de fixation 20. La cheville à expansion 34 est alors fixée au boîtier 12 par frottement.

Les pattes d'expansion 46 appuyant en opposition sur des méplats opposés de la face intérieure 22 du logement de fixation 20, l'effet de serrage est ainsi amplifié.

Lorsque l'extrémité arrière de la rampe de guidage 66 atteint l'arête avant 64 de la gorge 58 pour sortir de la gorge 58, la face d'extrémité arrière 40 de la tête de vis 30 n'est pas encore en butée contre la face avant de butée 42 de la collerette 36 de la cheville à expansion 34.

Comme représenté à la figure 8, l'écrou 68 est donc encore vissé pour amener la face d'extrémité arrière 40 de la tête de vis 30 en butée contre la face avant de butée 42 de la collerette 36. Durant ce trajet, l'ergot 56 glisse sur le méplat longitudinal de la tête de vis 30 tout en maintenant l'effort radial maximal de serrage "FR". La cheville à expansion 34 est ainsi fixée sur l'élément de carrosserie 16 par la vis 28 et l'écrou 68.

Ainsi, en cas de vissage de l'écrou 68 avec un couple très élevée, par exemple supérieur 3 Nm, seule la collerette 36 de la cheville à expansion 34 est comprimée longitudinalement entre la tête de vis 30 et l'écrou 68. L'effort radial de serrage "FR" des pattes d'expansion 46 est en effet limité à sa valeur maximale de manière à ne pas provoquer la fissuration de la protubérance 26 par une force radiale excessive.

Pour cette dernière portion de course axiale vers l'arrière de la tête de vis 30, le glissement de l'ergot 36 sur la face cylindrique extérieure de la tête de vis 30 oppose un effort axial de résistance moins important que l'effort axial qui était nécessaire pour déformer puis serrer les pattes d'expansion 46 depuis leur état de repos jusqu'à leur état expansé. L'opérateur en charge du vissage de l'écrou 68 ressent donc une facilité soudaine de vissage, comme un "à-coup", avant que la tête de vis 30 ne vienne dans sa position extrême arrière de fixation. Dans cette dernière position, le vissage nécessite de plus en plus de force.

L'opérateur est sûr que le feu de signalisation 10 est bien fixé sur le véhicule lorsqu'il ressent d'abord une résistance au vissage qui augmente pour amener les pattes d'expansion 46 dans leur position expansée, puis une baisse de la résistance au vissage pour amener la vis 28 dans sa position longitudinal extrême arrière de fixation, puis une dernière augmentation de résistance au vissage pour achever la fixation de la cheville 34 sur l'élément de carrosserie. Cet effet "d'à-coup" permet ainsi de donner un signal objectif à l'opérateur que le feu de signalisation 10 est correctement fixé.

En outre, la fixation de la cheville 34 à l'élément de carrosserie 16 par serrage axial de sa collerette 36 assure une fixation rigide et robuste de la cheville 34 sur l'élément de carrosserie 16. En effet, la collerette 36 est rigide et aucun élément déformable élastiquement en flexion radiale n'est interposé entre la tête de vis 30 et la face avant de l'élément de carrosserie 16.

De plus les pattes d'expansion 46 sont verrouillées dans leur état expansé.

L'invention a été décrite en application à un feu de signalisation de véhicule automobile. On comprendra qu'elle est aussi applicable pour la fixation de projecteurs avant ou arrière et aux feux de signalisation avant ou arrière, et de manière plus générale, à tout dispositif d'éclairage ou de signalisation de véhicule automobile. Les dispositifs d'éclairage ou de signalisation ainsi fixés sont susceptibles de remplir aussi bien des fonctions d'éclairage que des fonctions de feu de signalisation.

Selon une variante non représentée de l'invention, les pattes d'expansion présentent une extrémité avant libre et une extrémité arrière de liaison avec la cheville à expansion.

## Revendications

1. Dispositif d'éclairage ou de signalisation (10) de véhicule automobile comportant un boîtier (12) qui est destiné à être fixé à un élément de carrosserie (16) du véhicule automobile, le dispositif d'éclairage ou de signalisation (10) définissant une direction avant, l'élément de carrosserie (16) définissant une direction arrière,
le boîtier étant muni de moyens de fixation qui comportent :
- un logement de fixation (20) comportant un axe longitudinal (A), ouvert vers l'arrière et porté par le boîtier (12) ;
- une vis (28) de fixation qui comporte une tête avant (30) ;
- une cheville à expansion (34) en forme de douille s'étendant selon l'axe longitudinal (A), dans laquelle la tête de vis (30) est insérée et qui est reçue coulissante axialement dans le logement de fixation (20);
- au moins une patte d'expansion (46) de la cheville (34) qui est déformable vers un état expansé dans lequel une extrémité libre (54) de la patte d'expansion (46) est pressée radialement contre la face intérieure (22) du logement (20) avec un effort radial de serrage (FR) pour bloquer en coulissement la cheville (34) par rapport au boîtier (12) ;
**caractérisé en ce qu'**il comporte également
- des moyens pour limiter l'effort radial de serrage (FR) de la patte d'expansion (46) à une valeur maximale indépendamment d'un effort axial (FA) de vissage appliqué sur la vis (28).

2. Dispositif d'éclairage ou de signalisation (10) selon la revendication précédente, **caractérisé en ce que** la patte d'expansion (46) est en contact avec la tête de vis par l'intermédiaire d'une rampe de guidage (66) pour commander la patte d'expansion (46) vers son état expansé par coulissement axial de la tête de vis (30) vers l'arrière par rapport à la cheville (34).

3. Dispositif d'éclairage ou de signalisation (10) selon la revendication précédente, **caractérisé en ce que** les moyens pour limiter l'effort radial de serrage comportent la rampe de guidage (66) qui présente un encombrement radial de dimension déterminée pour limiter l'effort radial maximal de serrage (FR) de la patte d'expansion (46) contre la face intérieure (22) du logement (20) à une valeur maximale en deçà d'un effort de rupture de ladite face (22).

4. Dispositif d'éclairage ou de signalisation (10) selon la revendication précédente, **caractérisé en ce que** la rampe de guidage (66) présente un encombrement (D1) tel que l'effort radial maximal de serrage (FR) de la patte d'expansion (46) est atteint avant que la tête de vis (30) soit en butée contre une surface radiale avant de butée (42) de la cheville (34), l'effort radial maximal de serrage (FR) étant maintenu par contact de la patte d'expansion (46) avec une face de la tête de vis (30) jusqu'à ce que la tête de vis (30) soit dans sa position longitudinale de fixation.

5. Dispositif d'éclairage ou de signalisation (10) selon l'une quelconque des revendications précédentes, **caractérisé en ce que** la tête de vis (30) comporte une face radiale arrière (40) qui est destinée à venir en butée contre une face radiale avant de butée (42) de la cheville (34) pour bloquer le coulissement de la cheville (34) vers l'avant par rapport à la tête de vis (30) dans une position axiale extrême arrière de fixation.

6. Dispositif d'éclairage ou de signalisation (10) selon l'une quelconque des revendications précédentes, **caractérisé en ce que** la patte d'expansion (46) demeure dans son état de repos sous l'effet de la traction axiale de la tête de vis (30) pour permettre le coulissement de la cheville (34) depuis sa position avant de montage jusqu'à sa position axiale arrière de butée.

7. Dispositif d'éclairage ou de signalisation (10) selon l'une quelconque des revendications précédentes, **caractérisé en ce que** la cheville (34) comporte une collerette (36) d'extrémité arrière s'étendant radialement vers l'intérieur qui comporte une face radiale arrière de butée (44) contre l'élément de carrosserie (16) et une face avant formant la face avant de butée (42) de la cheville (34), notamment pour bloquer le coulissement de la tête de vis (30) vers l'arrière, la collerette (36) étant ainsi comprimée entre la tête de vis (30) et l'élément de carrosserie (16) lorsque le dispositif d'éclairage ou de signalisation (10) est fixé sur le véhicule.

8. Dispositif d'éclairage ou de signalisation (10) selon l'une des revendications précédentes 2 à 7, **caractérisé en ce que** la rampe de guidage (66) est portée par un ergot (56) qui s'étend radialement depuis l'extrémité libre (50) de la patte d'expansion (46) et qui est reçu dans une gorge (58) de la tête de vis (30), et **en ce que** la patte d'expansion (46) est guidée vers son état expansé par contact entre la rampe de guidage (66) et la face radiale avant (62, 64) de la gorge (58).

9. Dispositif d'éclairage ou de signalisation (10) selon la revendication précédente prise en combinaison avec la revendication 7, **caractérisé en ce que** lorsque l'effort radial maximal de serrage (FR) est atteint, l'ergot glisse hors de la gorge (58) sur la face cylindrique extérieure de la tête de vis (30) pour maintenir l'effort radial maximal de serrage (FR).

10. Dispositif d'éclairage ou de signalisation (10) selon l'une quelconque des revendications précédentes, **caractérisé en ce que** la face cylindrique extérieure de la cheville à expansion (34) présente un profil de forme complémentaire de celui du logement de fixation (20), ledit profil n'étant pas de révolution, notamment de manière à immobiliser la cheville à, expansion (34) en rotation dans les deux sens autour de l'axe longitudinal (A) par rapport au logement de fixation (20).

11. Dispositif d'éclairage ou de signalisation (10) selon l'une quelconque des revendications précédentes, **caractérisé en ce que** le profil transversal de la face intérieure (22) du logement (20) présente au moins un méplat qui coopère avec un méplat associé en vis-à-vis de la face cylindrique extérieure la cheville (34), notamment de manière à bloquer la rotation de la cheville (34) dans le logement (20) autour de l'axe longitudinal (A).

12. Dispositif d'éclairage ou de signalisation (10) selon la revendication précédente, **caractérisé en ce que** le méplat est réalisé venu de matière en une seule pièce avec le boîtier (12) du dispositif d'éclairage ou de signalisation (10).

13. Dispositif d'éclairage ou de signalisation (10) selon l'une quelconque des revendications précédentes, **caractérisé en ce que** le profil transversal de la face extérieure de la tête de vis (30) et le profil transversal de la face intérieure de la cheville à expansion (34) présentent des contours de formes complémentaire qui ne sont pas de révolution, notamment de manière à bloquer dans les deux sens la rotation de la vis (28) par rapport à la cheville à expansion (34) autour de l'axe longitudinal (A).

14. Dispositif d'éclairage ou de signalisation (10) selon l'une quelconque des revendications précédentes, **caractérisé en ce que** l'extrémité arrière libre (54) de la patte d'expansion (46) présente des rugosités ou des créneaux ou une surface texturée, notamment de manière à augmenter l'adhérence de la patte d'expansion (46) contre la face du logement (20) en vis-à-vis lorsque la patte d'expansion (46) est dans son état expansé.

15. Dispositif d'éclairage ou de signalisation (10) selon l'une quelconque des revendications précédentes, **caractérisé en ce qu'**un joint annulaire (47) d'étanchéité est interposé entre le boîtier (12) et l'élément de carrosserie (16) en entourant la vis de fixation (28).

## Patentansprüche

1. Beleuchtungs- oder Signalgebungsvorrichtung (10) für Kraftfahrzeuge mit einem Gehäuse (12), das zur Befestigung an einem Karosseriebauteil (16) des Kraftfahrzeugs bestimmt ist, wobei die Beleuchtungs- oder Signalgebungsvorrichtung (10) eine vordere Richtung, das Karosseriebauteil (16) eine hintere Richtung definiert, wobei das Gehäuse mit Befestigungsmitteln versehen ist, die umfassen:
- eine Befestigungsaufnahme (20) mit einer Längsachse (A), die nach hinten offen ist und von dem Gehäuse (12) getragen wird;
- eine Befestigungsschraube (28), die einen vorderen Kopf (30) aufweist,
- einen Spreizdübel (34) in Form einer sich entlang der Längsachse (A) erstreckenden Hülse, in den der Schraubenkopf (30) eingeführt ist und der in der Befestigungsaufnahme (20) axial gleitend aufgenommen ist;
- wenigstens einen Spreizfuß (46) des Dübels (34), der bis in einen gespreizten Zustand verformbar ist, in dem ein freies Ende (54) des Spreizfußes (46) mit einer radialen Spannkraft (FR) radial gegen die Innenseite (22) der Aufnahme (20) gedrückt wird, um das Gleiten des Dübels (34) bezüglich des Gehäuses (12) zu blockieren;
**dadurch gekennzeichnet, dass** sie ferner umfasst:
- Mittel zum Begrenzen der radialen Spannkraft (FR) des Spreizfußes (46) auf einen Maximalwert, unabhängig von einer auf die Schraube (28) einwirkenden axialen Schraubkraft (FA).

2. Beleuchtungs- oder Signalgebungsvorrichtung (10) nach dem vorhergehenden Anspruch,
**dadurch gekennzeichnet, dass** der Spreizfuß (46) über eine Führungsrampe (66) mit dem Schraubenkopf in Kontakt ist, um den Spreizfuß (46) durch axiales Gleiten des Schraubenkopfs (30) bezüglich des Dübels (34) nach hinten in seinen gespreizten Zustand zu bringen.

3. Beleuchtungs- oder Signalgebungsvorrichtung (10) nach dem vorhergehenden Anspruch,
**dadurch gekennzeichnet, dass** die Mittel zum Begrenzen der radialen Spannkraft die Führungsrampe (66) umfassen, die einen radialen Raumbedarf aufweist, dessen Größe so bestimmt ist, dass die maximale radiale Spannkraft (FR) des Spreizfußes (46) gegen die Innenseite (22) der Aufnahme (20) auf einen Maximalwert unterhalb einer Reißkraft der Innenseite (22) begrenzt ist.

4. Beleuchtungs- oder Signalgebungsvorrichtung (10) nach dem vorhergehenden Anspruch,
**dadurch gekennzeichnet, dass** die Führungsrampe (66) einen solchen Raumbedarf (D1) aufweist, dass die maximale radiale Spannkraft (FR) des Spreizfußes (46) erreicht ist, bevor der Schraubenkopf (30) gegen eine vordere radiale Anlagefläche (42) des Dübels (34) in Anschlag gelangt, wobei die maximale radiale Spannkraft (FR) durch Kontakt des Spreizfußes (46) mit einer Seite des Schraubenkopfs (30) so lange gehalten wird, bis sich der Schraubenkopf (30) in seiner Befestigungslängsstellung befindet.

5. Beleuchtungs- oder Signalgebungsvorrichtung (10) nach einem der vorhergehenden Ansprüche,
**dadurch gekennzeichnet, dass** der Schraubenkopf (30) eine hintere radiale Fläche (40) aufweist, die dazu bestimmt ist, gegen eine vordere radiale Anlagefläche (42) des Dübels (34) in Anschlag zu gelangen, um das Gleiten des Dübels (34) bezüglich des Schraubenkopfs (30) nach vorne in einer hinteren axialen Befestigungsendstellung zu blockieren.

6. Beleuchtungs- oder Signalgebungsvorrichtung (10) nach einem der vorhergehenden Ansprüche,
**dadurch gekennzeichnet, dass** der Spreizfuß (46) unter der Wirkung des axialen Zugs des Schraubenkopfs (30) in seinem Ruhezustand bleibt, um das Gleiten des Dübels (34) aus seiner vorderen Montagestellung in seine hintere axiale Anschlagsstellung zu ermöglichen.

7. Beleuchtungs- oder Signalgebungsvorrichtung (10) nach einem der vorhergehenden Ansprüche,
**dadurch gekennzeichnet, dass** der Dübel (34) einen sich radial nach innen erstreckenden hinteren äußeren Kragen (36) aufweist, der eine hintere radiale Fläche (44) zum Anschlag gegen das Karosseriebauteil (16) und eine die vordere Anlagefläche (42) des Dübels (34) bildende Vorderseite aufweist, insbesondere um das Gleiten des Schraubenkopfs (30) nach hinten zu blockieren, wobei der Kragen (36) beim Befestigen der Beleuchtungs- oder Signalgebungsvorrichtung (10) am Fahrzeug somit zwischen dem Schraubenkopf (30) und dem Karosseriebauteil (16) eingezwängt ist.

8. Beleuchtungs- oder Signalgebungsvorrichtung (10) nach einem der Ansprüche 2 bis 7,
**dadurch gekennzeichnet, dass** die Führungsrampe (66) von einer Nase (56) getragen wird, die sich radial von dem freien Ende (50) des Spreizfußes (46) aus erstreckt und die in einer Nut (58) des Schraubenkopfs (30) aufgenommen ist, und dass der Spreizfuß (46) durch einen Kontakt zwischen der Führungsrampe (66) und der radialen Vorderseite (62, 64) der Nut (58) in seinen gespreizten Zustand gebracht wird.

9. Beleuchtungs- oder Signalgebungsvorrichtung (10) nach dem vorhergehenden Anspruch in Verbindung mit Anspruch 7,
**dadurch gekennzeichnet, dass** die Nase bei Erreichen der maximalen Spannkraft (FR) aus der Nut (58) auf der zylindrischen Außenseite des Schraubenkopfs (30) herausgleitet, um die maximale radiale Spannkraft (FR) zu halten.

10. Beleuchtungs- oder Signalgebungsvorrichtung (10) nach einem der vorhergehenden Ansprüche,
**dadurch gekennzeichnet, dass** die zylindrische Außenseite des Spreizdübels (34) ein Profil aufweist, dessen Form komplementär zu der der Befestigungsaufnahme (20) ist, wobei das Profil nicht rotationsförmig ist, insbesondere um das Drehen des Spreizdübels (34) bezüglich der Befestigungsaufnahme (20) in beiden Richtungen um die Längsachse (A) zu blockieren.

11. Beleuchtungs- oder Signalgebungsvorrichtung (10) nach einem der vorhergehenden Ansprüche,
**dadurch gekennzeichnet, dass** das Querprofil der Innenseite (22) der Aufnahme (20) wenigstens eine Abflachung aufweist, die mit einer gegenüberliegenden zugeordneten Abflachung der zylindrischen Außenseite des Dübels (34) zusammenwirkt, insbesondere um das Drehen des Dübels (34) in der Aufnahme (20) um die Längsachse (A) zu blockieren.

12. Beleuchtungs- oder Signalgebungsvorrichtung (10) nach dem vorhergehenden Anspruch,
**dadurch gekennzeichnet, dass** die Abflachung mit dem Gehäuse (12) der Beleuchtungs- oder Signalgebungsvorrichtung (10) einstückig angeformt ausgeführt ist.

13. Beleuchtungs- oder Signalgebungsvorrichtung (10) nach einem der vorhergehenden Ansprüche,
**dadurch gekennzeichnet, dass** das Querprofil der Außenseite des Schraubenkopfs (30) und das Querprofil der Innenseite des Spreizdübels (34) einen komplementär geformten Umfang aufweisen, der nicht rotationsförmig ist, insbesondere um das Drehen der Schraube (28) bezüglich des Spreizdübels (34) um die Längsachse (A) in beiden Richtungen zu blockieren.

14. Beleuchtungs- oder Signalgebungsvorrichtung (10) nach einem der vorhergehenden Ansprüche,
**dadurch gekennzeichnet, dass** das freie hintere Ende (54) des Spreizfußes (46) Oberflächenunebenheiten oder Zacken oder eine texturierte Oberfläche aufweist, insbesondere, um das Haftvermögen des Spreizfußes (46) an der gegenüberliegenden Seite der Aufnahme (20) zu erhöhen, wenn sich der Spreizfuß (46) in seinem gespreizten Zustand befindet.

15. Beleuchtungs- oder Signalgebungsvorrichtung (10) nach einem der vorhergehenden Ansprüche,
**dadurch gekennzeichnet, dass** eine ringförmige Dichtung (47) die Befestigungsschraube (28) umschließend zwischen dem Gehäuse (12) und dem Karosseriebauteil (16) eingefügt ist.

## Claims

1. Lighting or signalling device (10) for a motor vehicle, comprising a housing (12) which is designed to be secured on a bodywork element (16) of the motor vehicle, the lighting or signalling device (10) defining a front direction, the bodywork element (16) defining a rear direction,
the housing being provided with securing means which comprise:
- a securing receptacle (20) comprising a longitudinal axis (A), which is open at the rear and is supported by the housing (12);
- a securing screw (28) which comprises a front head (30);
- an expansion anchor (34) in the form of a bush which extends according to the longitudinal axis (A), in which the screw head (30) is inserted, and which is received such as to slide axially in the securing receptacle (20);
- at least one expansion lug (46) of the anchor (34), which is deformable towards an expanded state in which a free end (54) of the expansion lug (46) is pressed radially against the inner surface (22) of the receptacle (20), with a radial tightening force (FR), in order to block the sliding of the anchor (34) relative to the housing (12);
**characterised in that** it also comprises:
- means for limiting the radial tightening force (FR) of the expansion lug (46) to a maximum value, independently of an axial screwing force (AF) applied to the screw (28).

2. Lighting or signalling device (10) according to the preceding claim, **characterised in that** the expansion lug (46) is in contact with the screw head by means of a guide ramp (66), in order to control the expansion lug (46) towards its expanded state by axial sliding of the screw head (30) rearwards relative to the anchor (34).

3. Lighting or signalling device (10) according to the preceding claim, **characterised in that** the means for limiting the radial tightening force comprise the guide ramp (66), which has a radial size with a specific dimension in order to limit the maximum radial tightening force (FR) of the expansion lug (46) against the inner surface (22) of the receptacle (20) to a maximum value below a rupture force of the said surface (22).

4. Lighting or signalling device (10) according to the preceding claim, **characterised in that** the guide ramp (66) has a size (D1) such that the maximum radial tightening force (FR) of the expansion lug (46) is reached before the screw head (30) abuts a front radial stop surface (42) of the anchor (34), the maximum radial tightening force (FR) being maintained by contact of the expansion lug (46) with a surface of the screw head (30), until the screw head (30) is in its longitudinal securing position.

5. Lighting or signalling device (10) according to any one of the preceding claims, **characterised in that** the screw head (30) comprises a rear radial surface (40) which is designed to abut a front radial stop surface (42) of the anchor (34), in order to block the sliding of the anchor (34) forwards relative to the screw head (30), in a rear end axial securing position.

6. Lighting or signalling device (10) according to any one of the preceding claims, **characterised in that** the expansion lug (46) remains in its state of rest under the effect of the axial traction of the screw head (30), in order to permit the sliding of the anchor (34) from its front fitting position, to its rear axial stop position.

7. Lighting or signalling device (10) according to any one of the preceding claims, **characterised in that** the anchor (34) comprises a rear end flange (36) which extends radially towards the interior, and comprises a rear radial surface (44) for stopping against the bodywork element (16), and a front surface which forms the front stop surface (42) of the anchor (34), in particular in order to block the sliding of the screw head (30) rearwards, the flange (36) thus being compressed between the screw head (30) and the bodywork element (16) when the lighting or signalling device (10) is secured on the vehicle.

8. Lighting or signalling device (10) according to one of the preceding claims 2 to 7, **characterised in that** the guide ramp (66) is supported by a pin (56) which extends radially from the free end (50) of the expansion lug (46), and is received in a groove (58) in the screw head (30), and **in that** the expansion lug (46) is guided towards its expanded state by contact between the guide ramp (66) and the front radial surface (62, 64) of the groove (58).

9. Lighting or signalling device (10) according to the preceding claim, taken in combination with claim 7, **characterised in that**, when the maximum radial tightening force (FR) has been reached, the pin slides out of the groove (58) in the outer cylindrical surface of the screw head (30), in order to maintain the maximum radial tightening force (FR).

10. Lighting or signalling device (10) according to any one of the preceding claims, **characterised in that** the outer cylindrical surface of the expansion anchor (34) has a profile with a form complementary to that of the securing receptacle (20), the said profile not being of revolution, in particular such as to immobilise the expansion anchor (34) in rotation in both directions around the longitudinal axis (A) relative to the securing receptacle (20).

11. Lighting or signalling device (10) according to any one of the preceding claims, **characterised in that** the transverse profile of the inner surface (22) of the receptacle (20) has at least one flattened part which co-operates with an associated flattened part opposite of the outer cylindrical surface of the anchor (34), in particular such as to block the rotation of the anchor (34) in the receptacle (20) around the longitudinal axis (A).

12. Lighting or signalling device (10) according to the preceding claim, **characterised in that** the flattened part is integral in a single piece with the housing (12) of the lighting or signalling device (10).

13. Lighting or signalling device (10) according to any one of the preceding claims, **characterised in that** the transverse profile of the outer surface of the screw head (30) and the transverse profile of the inner surface of the expansion anchor (34) have contours with complementary forms which are not of revolution, in particular such as to block in both directions the rotation of the screw (28) relative to the expansion anchor (34) around the longitudinal axis (A).

14. Lighting or signalling device (10) according to any one of the preceding claims, **characterised in that** the free rear end (54) of the expansion lug (46) has rough parts or pinnacles or a textured surface, in particular such as to increase the adhesion of the expansion lug (46) against the surface of the receptacle (20) opposite, when the expansion lug (46) is in its expanded state.

15. Lighting or signalling device (10) according to any one of the preceding claims, **characterised in that** an angular impermeability seal (47) is interposed between the housing (12) and the bodywork element (16), whilst surrounding the securing screw (28).
